Europäisches Patentamt

(19) European Patent Office

Office européen des brevets

(11) Publication number : **0 305 533 B1**

# (12) EUROPEAN PATENT SPECIFICATION

(45) Date of publication of patent specification :
**13.05.92 Bulletin 92/20**

(51) Int. Cl.⁵ : **B23K 26/00**

(21) Application number : **88901933.7**

(22) Date of filing : **19.02.88**

(86) International application number :
**PCT/JP88/00186**

(87) International publication number :
**WO 88/06939 22.09.88 Gazette 88/21**

(54) **METHOD OF CONTROLLING LASER OSCILLATOR.**

(30) Priority : **20.03.87 JP 66779/87**

(43) Date of publication of application :
**08.03.89 Bulletin 89/10**

(45) Publication of the grant of the patent :
**13.05.92 Bulletin 92/20**

(84) Designated Contracting States :
**DE FR GB IT NL**

(56) References cited :
**EP-A- 0 008 773**
**WO-A-85/01233**
**JP-A-57 134 274**
**JP-A-61 108 486**
**US-A- 4 074 349**

(73) Proprietor : **FANUC LTD.**
**3580, Shibokusa Aza-Komanba, Oshino-mura**
**Minamitsuru-gun, Yamanashi 401-05 (JP)**

(72) Inventor : **YAMAZAKI, Etsuo**
**566-93, Shimoongata-machi Hachioji-shi**
**Tokyo 192-01 (JP)**
Inventor : **NAGAMINE, Tsuyoshi**
**7-11-9, Owada-machi Hachioji-shi**
**Tokyo 192 (JP)**
Inventor : **ISOHATA, Shigeru**
**Furinsou 6, 7-10-7, Tamadaira Hino-shi**
**Tokyo 191 (JP)**

(74) Representative : **Brunner, Michael John et al**
**GILL JENNINGS & EVERY 53-64 Chancery**
**Lane**
**London WC2A 1HN (GB)**

EP 0 305 533 B1

# Description

The present invention relates to a laser machining control method, and more particularly to a laser machining control method wherein laser machining is carried out while the contents of a command program are changed.

## Background Art

Today, a laser machining equipment with a numerical control system is widely used. In such a laser machining equipment, an X-Y table is controlled by the numerical control system, a work is set in position on the X-Y table so that the work is subject to machining such as cutting by a laser beam emitted from a stationary laser oscillator.

Machining by a laser machining equipment is performed according to predetermined command programs. The command programs include programs for the movement of an X-Y table, and an output power, a pulse frequency and a duty of a laser beam or the like.

In the case of the laser machining, however, it is generally difficult for machining conditions to be determined theoretically, and so, in actual machining operation, the conditions are determined in many instances while machining is in progress, and thus, it is extremely troublesome for an operator to change the program each time machining conditions are changed.

WO 85/01233 discloses a laser machining system in which feedrate and positioning of the workpiece can temporarily be overridden.

It is an object of the present invention for solving the aforesaid problem to provide a laser machining control method wherein laser machining is carried out while the content of a command program is changed.

According to a first aspect of the present invention, there is provided a method of changing laser machining conditions by controlling an X-Y table by means of a numerical control system, said method comprising the steps of:

reading out a block of a command program stored in a memory and transferring the block of the command program to a preprocessing arithmetic unit;

converting the block of the command program into an executable form;

each time one block of the command program is converted, lighting a lamp to alert an operator to change the output conditions if desired;

changing the laser machining conditions of the converted block of the command program through a keyboard or a switch on an operation panel;

depressing an executing button on the operation panel; and

executing laser machining with the changed block of machining conditions and distributing a control pulse to the X-Y table.

Since the command program is interpreted and transferred for each one block and executed while it is changed, machining can be carried out while the machining conditions are changed without changing the program.

According to a second aspect of the present invention, there is provided a control system for laser machining equipment including an X-Y table, the control system comprising:

means for causing, in turn, each block of a command program to be read out from a memory and transferred into a preprocessing arithmetic unit for converting the read-out block into an executable form; characterised by:

means for changing the laser machining conditions of the converted block of the command program; and,

a lamp, the lamp being arranged to be lit each time one block of the command program is converted, thereby to alert an operator to change the output conditions if desired;

the means for causing the blocks of the command program to be read out and transferred into the arithmetic unit also being arranged to be operated to initiate laser machining with a changed block of machining conditions and causing a control pulse to be distributed to the X-Y table.

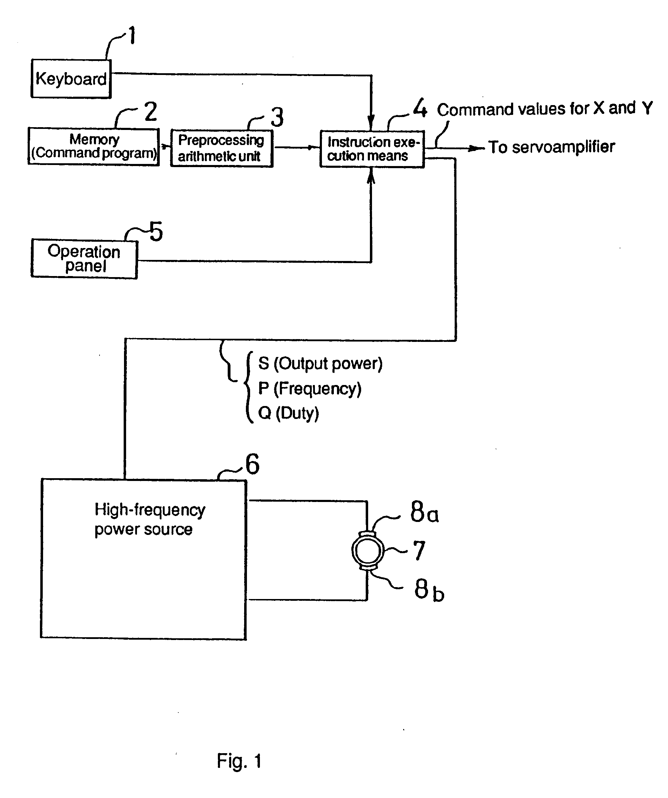

Fig.1 is a block diagram for embodying a laser machining control method of the present invention.

## Best Mode for Carrying Out the Invention

An embodiment of the present invention will hereinafter be described in specific detail with reference to the drawing.

Fig. 1 is a block diagram of a laser beam equipment for embodying the present invention, wherein denoted at 1 is a keyboard for inputting machining data or the like through which an operator can input necessary machining conditions and 2 a memory for storing the data inputted from a tape reader and the like. Denoted at 3 is a preprocessing arithmetic unit for reading out and interpreting the contents of a command program for each one block for changing the command program to an executable form.

For example, the command program or a machining program is instructed in the following form:

G01     X3000     Y5000     F2000

S600     P100     Q5     CR

where G01 is for linear cutting; X and Y are commands for movement; F for a cutting speed; S for a laser output power; p for an output frequency of a pulse output; and Q for a pulse duty of an output. More particularly,

the preprocessing arithmetic unit 3 reads out and interprets the machining program for dividing it into executable information.

Denoted at 4 is an instruction execution means for executing a command for one block. The command comprises a pulse distribution command applied to an X-axis and a Y-axis for moving an X-Y table and an output condition command for determining a laser oscillation condition. The pulse distribution command is used for outputting a distribution pulse for moving the X-axis and the Y-axis. The distribution pulse is transmitted to a non-illustrated servoamplifier, where the distribution pulse is amplified to drive servomotors for moving the X-Y table. The output condition command is used for determining an output power, a frequency and a duty ratio of a laser beam, A control panel denoted at 5 is provided with an operation button for manually operating the X-Y table, a start button and an override button for output conditions.

Denoted at 6 is a high-frequency power supply for supplying a high-frequency pulse power to a laser tube for effecting laser oscillation. Denoted at 7 is the laser tube. Denoted at 8a and 8b are electrodes, respectively. Laser medium gas passes through the inside of the laser tube 7 so that high-frequency electric discharge takes place inside the laser tube to cause the oscillation and amplification of a laser beam therein.

A machinery control method of the present invention will be described below. When the start button on the operation panel 5 is depressed, a command program for one block stored in the memory 2 is read out to the preprocessing arithmetic unit and converted into an executable form. At the time, a lamp on the operation panel 5 lights to confirm whether the operator changes machining conditions. If the change is not necessary, the operator depresses an exeuction button on the operation panel 5. When the machining conditions or output conditions are necessary to be changed, the conditions to be changed are inputted through the keyboard 1. After changing the conditions, the execution button on the operation panel 5 is depressed. The machining operation can be carried out according to the command program whose contents are changed by repeating the cycle.

The programs changed as necessary can be stored in a separate area of the memory 2 for use in a future machinery.

With the aforesaid embodiment, wherein machining is carried out while the command program is changed, but the machining can also be carried out by inputting the output conditions each time the machining is carried out without programming output conditions.

As described above, according to the present invention, since the the command program is interpreted, changed and executed for each block, laser machining can be carried out while actual machining conditions are examined.

## Claims

1. A method of changing laser machining conditions by controlling an X-Y table by means of a numerical control system, said method comprising the steps of:

    (a) reading out a block of a command program stored in a memory ( 2 ) and transferring the block of the command program to a preprocessing arithmetic unit (3) ;

    (b) converting the block of the command program into an executable form;

    (c) each time one block of the command program is converted, lighting a lamp to alert an operator to change the output conditions if desired ;

    (d) changing the laser machining conditions (F,S,P,Q) of the converted block of the command program through a keyboard (1) or a switch on an operation panel (5) ;

    (e) depressing an executing button on the operation panel (5) ; and

    (f) executing laser machining with the changed block of machining conditions (F,S,P,Q) and distributing a control pulse to the X-Y table.

2. A method according to claim 1, wherein said step (d) includes changing the conditions for the pulse frequency and pulse duty of a high frequency power source.

3. A method according to claim 1, wherein machining is performed by inputting machining conditions during a machining operation without programming the machining conditions.

4. A control system for laser machining equipment including an X-Y table, the control system comprising:

    means (5) for causing, in turn, each block of a command program to be read out from a memory (2) and transferred into a preprocessing arithmetic unit (3) for converting the read-out block into an executable form; characterised by:

    means (1) for changing the laser machining conditions (F,S,P,Q) of the converted block of the command program; and,

    a lamp, the lamp being arranged to be lit each time one block of the command program is converted, thereby to alert an operator to change the output conditions if desired;

    the means (5) for causing the blocks of the command program to be read out and transferred into the arithmetic unit (3) also being arranged to be operated to initiate laser machining with a changed block of machining conditions (F,S,P,Q) and causing a control pulse to be distributed to the X-Y table.

## Revendications

1. Procédé de modification de conditions d'usinage par laser en commandant une table à coordonnées X-Y au moyen d'un système de commande numérique, ce procédé comprenant les étapes consistant à :

(a) lire un bloc d'un programme d'instructions stocké dans une mémoire (2), et transférer le bloc du programme d'instructions dans une unité arithmétique de prétraitement (3) ;

(b) convertir le bloc du programme d'instructions en une forme exécutable ;

(c) chaque fois qu'un bloc du programme d'instructions est converti, allumer une lampe pour alerter l'opérateur afin qu'il modifie les conditions de sortie s'il le désire ;

(d) modifier les conditions (F, S, P, Q) d'usinage par laser du bloc converti du programme d'instructions par l'intermédiaire d'un clavier (1) ou d'un commutateur placé sur un panneau de commande (5) ;

(e) appuyer sur un bouton d'exécution placé sur le panneau de commande (5) ; et

(f) effectuer l'usinage par laser avec le broc modifié de conditions d'usinage (F, S, P, Q), et envoyer une impulsion de commande à la table à coordonnées X-Y.

2. Procédé selon la revendication 1, dans lequel l'étape (d) inclue la modification des conditions de la fréquence d'impulsion et de l'utilisation d'une source d'énergie à haute fréquence.

3. Procédé selon la revendication 1, dans lequel l'usinage s'effectue en introduisant des conditions d'usinage pendant une opération d'usinage, sans programmer les conditions d'usinage.

4. Système de commande pour une machine d'usinage par laser comportant une table à coordonnées X-Y, ce système de commande comprenant :

des moyens (5) pour faire en sorte que chaque bloc d'un programme d'instructions soit, à son tour, lu dans une mémoire (2) et transféré dans une unité arithmétique de prétraitement (3) pour convertir le bloc lu en une forme exécutable ; caractérisé par

des moyens (1) pour modifier les conditions (F, S, P, Q) d'usinage par laser du bloc converti du programme d'instructions ; et

une lampe, la lampe étant agencée pour être allumée chaque fois qu'un bloc du programme d'instructions est converti, ce qui alerte l'opérateur pour qu'il modifie les conditions de sortie s'il le désire ;

les moyens (5) pour faire en sorte que les blocs du programme d'instructions soient lus et transférés dans l'unité arithmétique de prétraitement (3) étant également agencés pour être mis en action afin de déclencher l'usinage par laser avec un bloc modifié de conditions d'usinage (F, S, P, Q), et provoquant l'envoi d'une impulsion de commande à la table à coordonnées X-Y.

## Patentansprüche

1. Verfahren zur Veränderung von Laser-Arbeitsbedingungen durch Steuerung einer X-Y-Tabelle mittels eines numerischen Steuersystems, wobei das Verfahren folgende Schritte aufweist:

(a) Auslesen eines Blocks eines Befehlsprogramms, das in einem Speicher (2) gespeichert ist, und Transfer des Blocks des Befehlsprogramms zu einer arithmetischen Vorverarbeitungseinheit (3) ;

(b) Umwandlung des Blocks des Befehlsprogramms in eine ausführbare form;

(c) Aufleuchten einer Lampe jedesmal, wenn ein Block des Befehlsprogramms umgewandelt ist, zur Alarmierung eines Bedieners, um die Ausgangsbedingungen zu verändern, falls dies erwünscht ist;

(d) Veränderung der Laserarbeitsbedingungen (F,S,P,Q) des umgewandelten Blocks des Befehlsprogramms mittels einer Tastatur (1) oder eines Schalters auf einer Betriebsplatte (5);

(e) Drücken eines Ausführungsknopfes auf der Betriebsplatte (5); und

(f) Ausführung der Laserarbeit mit dem geänderten Block der Arbeitsbedingungen (F,S,P,Q) und Verteilen eines Steuerimpulses auf der X-Y-Tabelle.

2. Verfahren nach Anspruch 1, worin der Schritt (d) beinhaltet, daß die Bedingungen für die Pulsfrequenz und die Pulsabgabe einer hochfrequenten Stromquelle verändert werden.

3. Verfahren nach Anspruch 1, worin die Maschinenarbeit durch Eingabe der Arbeitsbedingungen während eines Arbeitsvorganges und ohne Programmierung der Arbeitsbedingungen durchgeführt wird.

4. Steuersystem für eine Laserarbeitsausrüstung, die eine X-Y-Tabelle aufweist, mit:

einem Mittel (5) für das aufeinanderfolgende Auslesen jedes Blocks eines Befehlsprogramms aus einem Speicher (2) und für den Transfer in eine arithmetische Vorverarbeitungseinheit (3) für die Umwandlung des ausgelesenen Block in eine ausführbare form; gekennzeichnet durch:

ein Mittel (1) für die Veränderung der Laserarbeitsbedingungen (F,S,P,Q) des umgewandelten Blocks des Befehlsprogramms und

eine Lampe, die jedesmal leuchtet, wenn ein Block des Befehlsprogramms umgewandelt ist, wodurch ein Bediener alarmiert wird, zur Veränderung der Ausgangsbedingungen, falls dies gewünscht ist,

wobei das Mittel (5) für das Auslesen der Blocks des Befehlsprogramms und für den Transfer in die arithmetische Vorverarbeitungseinheit (3) auch angeordnet ist, um die Laserarbeit mit einem geänderten Block von Arbeitsbedingungen (F,S,P,Q) zu initiieren, und um einen Steuerimpuls hervorzurufen, der zu der X-Y-Tabelle verteilt wird.

Fig. 1